(19) **Europäisches Patentamt**

**European Patent Office**

**Office européen des brevets**

(11) **EP 1 150 763 B1**

(12) **FASCICULE DE BREVET EUROPEEN**

(45) Date de publication et mention
de la délivrance du brevet:
**07.01.2004 Bulletin 2004/02**

(21) Numéro de dépôt: **00905135.0**

(22) Date de dépôt: **15.02.2000**

(51) Int Cl.$^7$: **B01D 53/86**

(86) Numéro de dépôt international:
**PCT/FR2000/000367**

(87) Numéro de publication internationale:
**WO 2000/048715 (24.08.2000 Gazette 2000/34)**

(54) **PROCEDE POUR ABATTRE SIMULTANEMENT LES OXYDES NITRIQUES ET LE PROTOXYDE D'AZOTE DANS LES GAZ QUI EN CONTIENNENT**

VERFAHREN ZUM GLEICHZEITIGEN ENTFERNEN VON STICKOXYDEN UND VON DISTICKSTOFFOXYD AUS GASEN

METHOD FOR SIMULTANEOUSLY ABATING NITRIC OXIDES AND NITROUS OXIDES IN GASES CONTAINING THEM

(84) Etats contractants désignés:
**AT BE CH CY DE DK ES FI FR GB GR IE IT LI LU MC NL PT SE**

(30) Priorité: **18.02.1999 FR 9901999**

(43) Date de publication de la demande:
**07.11.2001 Bulletin 2001/45**

(73) Titulaire: **Grande-Paroisse S.A.
92800 Puteaux (FR)**

(72) Inventeurs:
- **NEVEU, Bernard
  décédé (FR)**
- **DELAHAY, Gérard
  F-34090 Montpellier (FR)**
- **MAUVEZIN, Mathias
  F-34000 Montpellier (FR)**
- **COQ, Bernard
  F-34980 Montpellier (FR)**

(74) Mandataire: **Ohresser, François
ATOFINA (DCRD/DPI),
4/8, cours Michelet
92800 Puteaux (FR)**

(56) Documents cités:
**EP-A- 0 393 917          GB-A- 2 162 830
US-A- 5 516 497**

- **PATENT ABSTRACTS OF JAPAN vol. 9, no. 134, 8 juin 1985 (1985-06-08) & JP 60 022922 A (BABCOCK HITACHI KK), 5 février 1985 (1985-02-05)**

Remarques:
Le dossier contient des informations techniques présentées postérieurement au dépôt de la demande et ne figurant pas dans le présent fascicule.

## Description

La présente invention appartient au domaine de la protection de l'environnement. Elle concerne l'épuration des gaz industriels avant leur rejet à l'atmosphère. Plus précisément, elle a trait au traitement des gaz de queue des effluents gazeux issus des ateliers de fabrication de l'acide nitrique qui contiennent usuellement, outre de l'oxygène à raison de 1,5 à 5 %, de 0,5 % à 5 % d'eau, de 50 à 6000 ppmv d'oxydes nitriques et de 500 à 1500 ppmv de $N_2O$, et dont la température est généralement inférieure à 400°C.

Les oxydes nitriques $NO_x$, qui comprennent NO et $NO_2$, sont des gaz polluants, principalement en raison de leur action corrosive. Ils sont pour une large part à l'origine des pluies acides. Dans la synthèse de l'acide nitrique, ce sont ces gaz que l'on produit par oxydation de l'ammoniac par l'oxygène sur platine à haute température. Ils sont retenus dans les tours d'absorption pour y être transformés en acide nitrique. Il en échappe dans les gaz de queue, d'où l'on sait les éliminer à un niveau convenable par réduction catalytique par l'ammoniac : c'est le procédé dit SCR (mis pour selective catalytic reduction), qui est mis en oeuvre grâce à des catalyseurs zéolithiques. Un brevet européen (EP-B-0393917, Engelhard Corporation) révèle que la zéolithe bêta associée au fer comme promoteur, est un catalyseur efficace pour la réduction sélective des $NO_x$ par l'ammoniac; il ne fait aucune référence au protoxyde d'azote.

Le protoxyde d'azote ou oxyde nitreux, de formule $N_2O$, est également produit lors de l'oxydation de l'ammoniac par l'oxygène de l'air à haute température, et il s'en produit aussi lors de la destruction SCR des oxydes nitriques. Pendant longtemps, on ne s'était guère préoccupé de l'éliminer avant rejet à l'atmosphère jusqu'à ce qu'on ait pris conscience que c'était un gaz à fort effet de serre. Le brevet japonais JP 08057262 (Babcock Hitachi) préconise l'utilisation de la bêta-fer pour abattre le protoxyde d'azote par réduction par l'ammoniac. L'inventeur ne fait pas référence aux oxydes $NO_x$.

L'utilisation d'une série de pots catalytiques sur une même installation pour réduire successivement la teneur des gaz en $NO_x$ et $N_2O$ est une solution industriellement peu satisfaisante. On a donc recherché un catalyseur unique qui opèrerait simultanément la destruction des $NO_x$ et du $N_2O$ par l'ammoniac, et dans les mêmes conditions de fonctionnement, en particulier à température inférieure à 400°C, et qui au surplus ait une stabilité hydrothermique suffisante à 600°C pour résister aux pointes de température auxquelles il peut être soumis dans certaines circonstances de son utilisation. Une catalyse SCR qui en une seule opération permettrait d'abattre en même temps tous les oxydes d'azote, le protoxyde comme les oxydes acides, constituerait un progrès technique hautement apprécié. L'idée est donc venue aux inventeurs de rechercher si la bêta-fer ne serait pas le catalyseur idéal pour un tel traitement, malgré le préjugé bien ancré selon lequel les catalyseurs SCR ammoniac ont justement tendance à fabriquer du protoxyde d'azote.

On a alors découvert que l'on pouvait détruire à la fois $N_2O$ et $NO_x$ dans les gaz qui en contiennent ainsi que de l'oxygène par réduction catalytique sélective par l'ammoniac sur zéolithe bêta contenant du fer (ci-après FeBEA). Les réactions possibles de l'ammoniac et des oxydes d'azotes sont multiples.

Pour la réaction $NO/NH_3$, on a probablement :

$$2NO + 2\ NH_3 + 1/2\ O_2 \rightarrow 2N_2 + 3\ H_2O$$

Pour $NO_2/NH_3$, on aurait :

$$6\ NO_2 + 8\ NH_3 \rightarrow 7\ N_2 + 12\ H_2O$$

Pour $N_2O/NH_3$, on a détecté par résonance magnétique nucléaire $^{15}NH_3$ que se déroulaient les deux réactions :

$$(1)\ N_2O + 2/3\ NH_3 \rightarrow 4/3\ N_2 + H_2O$$

$$(2)\ N_2O + NH_3 + 3/4\ O_2 \rightarrow 3/2\ N_2 + 3/2\ H_2O,$$

Il s'agit donc d'un système à stoechiométrie complexe, mais on peut avancer que les conditions optimales de fonctionnement de l'invention se trouvent quand l'ammoniac est présent dans un rapport de 0,7 et 1,4 par rapport aux oxydes d'azote. Les conversions du $N_2O$ et des $NO_x$ sont alors totales. La fuite d'ammoniac est inexistante, ce qui est conforme à la propriété connue des zéolithes-fer d'être d'excellents catalyseurs d'oxydation de $NH_3$ en $N_2$, pour autant que l'oxygène soit présent en quantité suffisante. Des rapports stoechiométriques supérieurs à 1,4 sont sans intérêt industriel. Dans le cas d'un mélange classique de gaz de sortie d'atelier de production d'acide nitrique, le rapport NH3 / oxydes d'azote est situé aux alentours de 0,9.

La synthèse de la zéolithe bêta (BEA) a été décrite en 1967 par Wadlinger R.L. et al. (R.L. Wadlinger, G.T. Kerr et E.J. Rosinski, 1967 dans US 3,308,069), et sa structure a été élucidée indépendamment vers 1988 par Newsam J.M. et coll. (Proc. R. Soc. Lond. A 420, 1588) et Higgins J.B. et coll. (Zeolites, 8, 446, 1988). C'est une zéolithe qui résulte de l'intercroissance de deux polytypes distincts mais intimement liés, l'un de symétrie tétragonale (polytype A), l'autre de symétrie monoclinique (polytype B), tous deux construits à partir de la même unité tertiaire centrosymétrique et possédant des systèmes tridirectionnels de pores formés de cycles à 12 tétraèdres. Les canaux sont ouverts, (0,64 X 0,76 nm) et (0,55 X 0,55 nm) (voir W.M. Meier et D.

H. Olson, Zeolites, 12 (1992) 459-654). La structure correspondante est visualisable sur Internet à http://www.iza-sc.ethz.ch/iza-SC/. C'est avec la faujasite, l'un des systèmes poreux les plus ouverts parmi les zéolithes.

La zéolithe bêta de l'invention est une BEA dont le rapport Si/Al est compris entre 8 et 100, de préférence entre 8 et 20. Elle contient du fer, et sa teneur en fer va de 0,02 % à 8 % (en poids).

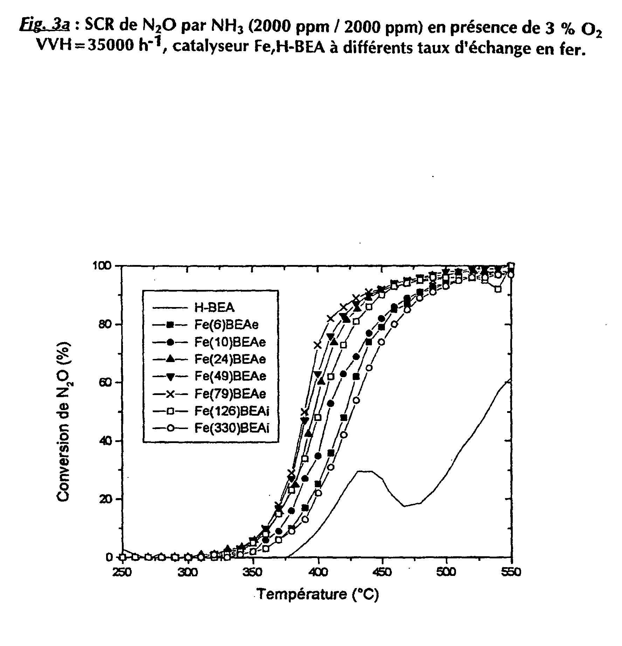

Il importe peu, semble-t-il, que le fer soit apporté par imprégnation ou par échange, le solide résultant montrant une efficacité comparable dans la transformation de $N_2O$ en $N_2$. C'est le fer extérieur aux grains ou présent dans les canaux ou les cages du cristal qui est le fer actif. Le fer qui s'est incorporé dans le réseau lors de la synthèse de la zéolite est en coordination tétraédrique et ne procure aucune activité catalytique. Il est nécessaire qu'il y ait un minimum (0,02 %) de fer non tétraédrique dans le catalyseur pour que s'expriment ses propriétés exploitées dans l'invention. On a borné les teneurs hautes à 8 % de façon quelque peu arbitraire, bien que des teneurs en fer plus élevées ne s'opposent pas au fonctionnement du catalyseur ; elles sont sans véritable intérêt industriel. On préférera des teneurs comprises entre 0,5 et 3 %. Le catalyseur de formule $Fe(79)BEA_e$ de l'exemple la) et de la figure 3a avec une teneur en fer de 1,50 % semble réaliser un valable optimum. On réserve plutôt la technique de l'imprégnation aux FeBEA fortement chargées en fer.

L'échange et l'imprégnation sont des techniques bien connues de l'homme du métier et leur application à la zéolite bêta ne soulève aucun problème majeur. Pour préparer une zéolite bêta-fer par échange, on introduit le fer, via la solution d'un de ses sels hydrosolubles, soit dans une BEA sous sa forme habituelle, qui est celle d'une BEA partiellement sodique, soit dans une BEA préalablement mise sous forme ammonium par pré-échange par $NH_4^+$ qu'il est préférable d'effectuer afin d'éliminer les traces de Na et obtenir un catalyseur un peu plus performant en réduction des oxydes d'azote. Ces techniques fournissent des zéolithes en poudre.

Les catalyseurs selon l'invention sont plutôt mis en forme d'agglomérés, une présentation préférée dans la pratique industrielle pour des raisons de minimisation de la perte de charge des gaz à leur traversée du lit de catalyseur. L'agglomération des zéolithes est bien connue de l'homme du métier. On procède par empâtage de la poudre de zéolithe avec un liant généralement fluidifié par l'eau, souvent constitué d'une argile à la fois suffisamment plastique pour pouvoir former l'aggloméré en billes à l'assiette, en pastilles par moulage ou en filés à la presse à filer, et durcissable par cuisson pour donner une cohésion et une dureté suffisante à l'aggloméré. Les argiles utilisées sont des kaolinites, des attapulgites, des bentonites, de l'halloysite ou des mélanges de ces argiles. On peut aussi utiliser des liants siliceux ou alumineux. En particulier l'agglomération avec des alumines peptisées donne des granulés très résistants, ce mode d'agglomération étant ici possible parce que la BEA n'est pas dégradée par l'acidité du liant.

Après agglomération, les granulés sont activés thermiquement. On entend par là qu'on les soumet à une cuisson réalisée sous air, à une température d'environ 400°C, dont le rôle est à la fois de durcir le liant, de le déshydrater sans le dégrader hydrothermiquement, et dans le cas des BEA échangées à partir d'une forme ammonium, d'éliminer une grande partie des ions ammonium et de mettre la zéolithe sous forme H.

On peut également commencer par agglomérer la BEA partiellement sodique, puis la durcir par calcination, et procéder aux échanges sur l'aggloméré. Après séchage, une seconde calcination permet de mettre la BEA / fer sous forme H si la BEA mise en oeuvre a été prise sous forme ammonium.

Le procédé de traitement des gaz selon l'invention consiste à faire passer les gaz à épurer, dont la plage des concentrations en oxydes d'azotes, $N_2O$ et NOx confondus, s'étend de 100 à 7000 ppmv, et qui contiennent en outre de 1,5 à 5 % d'oxygène et 0,5 à 5 % d'eau, ($N_2O$ s'étend de 50 à 5000 ppm et NO de 50 à 2000 ppm), à travers un lit de catalyseur disposé dans un réacteur maintenu à une température comprise entre 200 et 600°C, à des vitesses volumiques horaires (VVH) de 1000 à 50 000 $h^{-1}$, Le réacteur chargé du lit de catalyseur FeBEA peut être un réacteur à flux axial ou radial. La technologie correspondante ne diffère guère alors de celle du SCR que par remplacement du catalyseur classique par le catalyseur à base de BEA-fer.

Le système BEA-fer s'est avéré le meilleur système pour la conversion du protoxyde d'azote, si on le compare à d'autres zéolithes proposées à diverses reprises comme catalyseurs de réduction des oxydes d'azote, comme la mordénite-fer, ou les zéolithes Y-fer.

## *EXEMPLES*

Dans tous les exemples donnés, le taux d'échange ( %) en fer a été défini comme suit : 3 fois la teneur molaire en fer divisée par la teneur molaire en aluminium et multipliée par 100. Dans la suite, une écriture telle que Fe(Z)BEA représentera une FeBEA dont le taux d'échange en fer est de Z %.

**Exemple 1** : préparation de poudres de FeBEA par échange

La zéolithe BEA utilisée est la poudre CP814E fournie par Zeolyst international (PQ corporation). Son rapport $SiO_2/Al_2O_3$ est de 25 ; elle contient 0,05 % en poids de $Na_2O$. Sa surface spécifique est de 680 $m^2$/g. Cette zéolithe présente les raies de diffraction X caractéristiques d'une zéolithe BEA, telles que rapportées dans l'appendice II du volume 10 de la revue Zeolites (1990) et dans l'article de J.B. Higgins (Zeolites, vol. 8 (1988) 446-452).

**1a) Préparation de la FeBEA par simple échange**

On a préparé les solides FeBEA$_e$ suivants (l'indice e pour qualifier l'introduction du fer par un processus d'échange)

$$Fe(5)BEA_e,$$

$$Fe(10)BEA_e,$$

$$Fe(24)BEA_e,$$

$$Fe(49)BEA_e,$$

$$Fe(79)BEA_e,$$

en mélangeant 2 g de poudre de zéolithe BEA (PQ CP814E) avec 500 cm$^3$ d'une solution aqueuse de Fe$(NO_3)_3$ (0,159 g de Fe$(NO_3)_3$), en laissant l'ensemble sous agitation pendant 24 h, puis en séparant la phase solide de la phase liquide par centrifugation ; en lavant alors le solide ainsi préparé avec 200 ml d'eau à pH = 5, en le centrifugeant à nouveau, le séchant à 80°C pendant 12 heures sous air, puis le calcinant à 500°C pendant 24 heures. On obtient une poudre qui se révèle avoir la composition d'une Fe(49)BEA$_a$.

En variant la quantité de solution ferrique, on a obtenu les autres compositions Fe(5)BEA$_e$, Fe(10)BEA$_e$, Fe(24)BEA$_e$, Fe(79)BEA$_e$. Les compositions respectives en sont :

- Fe(5)BEA$_e$, avec en poids Si=36,4 %, Al=2,67 %; Na=0,52 %, Fe=0,11 % ;
- Fe(10)BEA$_e$, avec en poids Si=35 %, Al=2,64 %; Na=0,39 %, Fe=0,19 % ;
- Fe(24)BEA$_e$, avec en poids Si=34,7 %, Al=2,43 %; Na=0,57 %, Fe=0,40 % ;
- Fe(49)BEA$_e$, avec en poids Si=35,45 %, Al=2,65 %; Na=0,75 %, Fe=0,90 % ;
- Fe(79)BEA$_e$, avec en poids Si=34,7 %, Al=2,75 %; Na=0,50 %, Fe=1,50 %.

**1 b) Préparation de poudre de FeBEA avec pré-échange ammonium**

On a mélangé 2 g de BEA (PQ CP814E) avec 200 cm$^3$ d'une solution 2M de NH$_4$NO$_3$ et porté l'ensemble à reflux pendant 24 h. La phase solide est ensuite lavée à l'eau permutée et séchée à 80°C pour donner NH$_4$-BEA$_a$ (l'indice a qualifie le double échange ammonium).

On a mélangé 2 g de cette NH$_4$-BEA avec 500 cm$^3$ d'une solution aqueuse de Fe$(NO_3)_3$ (0,159 g de Fe$(NO_3)_3$) et l'ensemble est laissé sous agitation pendant 24 h, après quoi on sépare la phase solide de la phase liquide par centrifugation. Le solide est lavé avec 200 ml d'eau à pH = 5. On centrifuge à nouveau l'ensemble et le solide est d'abord séché à 80°C pendant 12 heures sous air puis calciné à 500°C pendant 24 heures. On obtient une poudre qui se révèle avoir la composition d'une Fe(49)BEA$_a$ avec en poids Si=35,6 %, Al=2,8 %, Na= < 0,05 %, Fe=1 %.

**Exemple 2** : préparation de poudre de zéolithes bêta-fer par imprégnation du sel de fer.

On a préparé les solides FeBEA$_i$ suivants (l'indice i pour qualifier l'introduction du fer par un processus d'imprégnation) :

$$Fe(51)BEA_i$$

$$Fe(126)BEA_i$$

$$Fe(169)BEA_i$$

$$Fe(330)BEA_i$$

par imprégnation de la zéolithe BEA (PQ CP814E) selon le processus opératoire suivant.

On imprègne 2 g de BEA avec 20 ml de trois solutions aqueuses de Fe$(NO_3)_3$ contenant respectivement 0,130; 0,389; 0,519; 1,038 g de Fe$(NO_3)_3$. Le solide est ensuite séché à 80°C puis calciné sous air à 500°C.

On obtient des poudres qui se révèlent à l'analyse avoir la composition de:

- Fe(51)BEA$_i$, avec en poids Si = 33,0 %, Al=2,85 %; Na=0,70 %, Fe=1,00 %
- Fe(126)BEA$_i$, avec en poids Si=33,5 %, Al=2,70 %; Na=0,55 %, Fe=2,35 %
- Fe(169)BEA$_i$, avec en poids Si=33,0 %, Al= 2,75 %; Na=0,50 %, Fe=3,20 %
- Fe(330)BEA$_i$, avec én poids Si=32,6 %, Al= 2,60 %; Na=0,85 %, Fe=5,25 %.

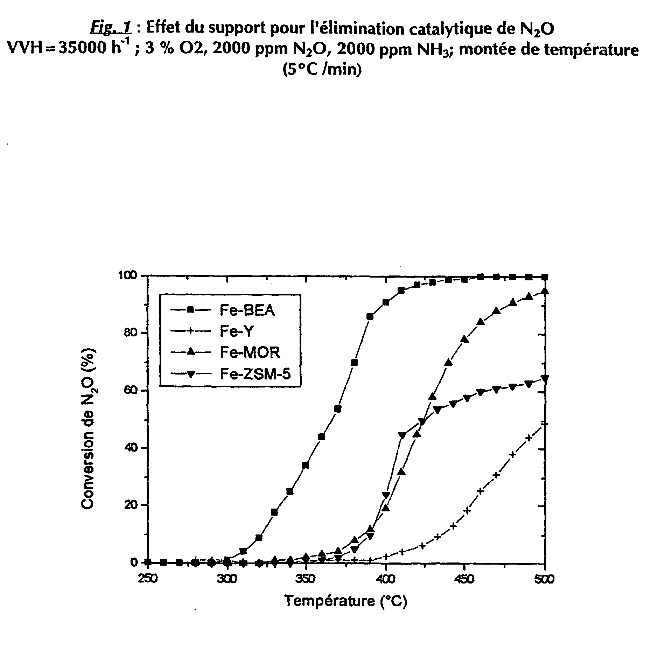

**Exemple 3** : Réduction du N$_2$O - Efficacité comparée de diverses zéolithes (Fig. 1)

L'efficacité de la Fe(49)BEA$_e$ a été comparée à d'autres zéolithes au fer dont l'introduction du fer a été effectuée par échange selon le processus décrit dans l'exemple 1 sans passer par le pré-échange à l'ammonium (Y-fer, Mordénite-fer, ZSM5-fer). Les exemples qui suivent font référence à des tests catalytiques en température programmée. Les présents profils ont été obtenus dans des conditions variables, mais dont les points communs sont exprimés ici :

- évolution en température de 25 à 550 °C, à raison de 5°C par minute, ou test en palier de température descendante de 550 à 25°C, avec des paliers de 1 heure tous les 10°C.
- la détection et l'analyse des gaz effluents sont effectuées à l'aide d'un analyseur de gaz de type spectromètre de masse quadrupolaire (QMS 200 de Balzers) ;
- la prise d'essai de catalyseur (75 mg) est d'abord activée à 550°C pendant une heure après montée en température à raison de 10°C par minute dans l'air (débit 30 cm$^3$. min$^{-1}$);
- le mélange gazeux à épurer est constitué de 3 % de $O_2$, 0-2000 ppmv de $N_2O$, 0-4000 ppmv de $NH_3$, 0-1000 ppmv de NO, 0-3 % de $H_2O$, dans l'hélium dont le débit varie pour correspondre à des VVH variant de 10000 h$^{-1}$ à 35000 h$^{-1}$.

Une conversion de 50 % est atteinte dès 365°C pour la FeBEA tandis que des températures de 430°C, 430°C et 500°C sont nécessaires pour les zéolithes Fe-ZSM5, Fe-MOR et Fe-Y respectivement. Cette figure montre que le profil de conversion de $N_2O$ de la FeBEA est décalé entre 50°C et 140°C vers les basses températures, selon la conversion, par rapport aux autres zéolithes au fer. Ce résultat confirme que la zéolithe bêta au fer est la plus active en élimination de $N_2O$ en présence d'ammoniac.

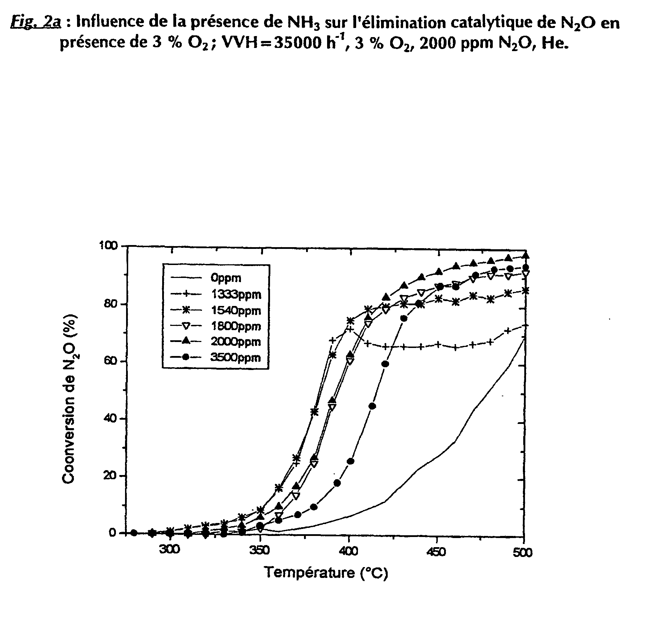

**Exemple 4** : Influence de la teneur en ammoniac sur la réduction du $N_2O$ (Fig. 2a)

L'effet de la concentration en ammoniac a été réalisé en présence de Fe(49)BEA$_e$ en réduction en température programmée de $N_2O$ dans les conditions suivantes: 2000 ppmv $N_2O$, 1333 à 3500 ppmv $NH_3$, 3 % $O_2$ et une vitesse volumique horaire de 35000 h$^{-1}$.

En absence d'ammoniac, la zéolithe bêta au fer est peu active en élimination de $N_2O$. Un rapport en $NH_3/N_2O$=0,9 (1800 ppm $NH_3$, 2000 ppm $N_2O$) semble nécessaire pour atteindre des conversions satisfaisantes (>80 %). Une trop forte concentration en ammoniac (ex. 3500 ppm, $NH_3/N_2O$=1,75) rend moins efficace l'activité réductrice de la zéolithe bêta au fer

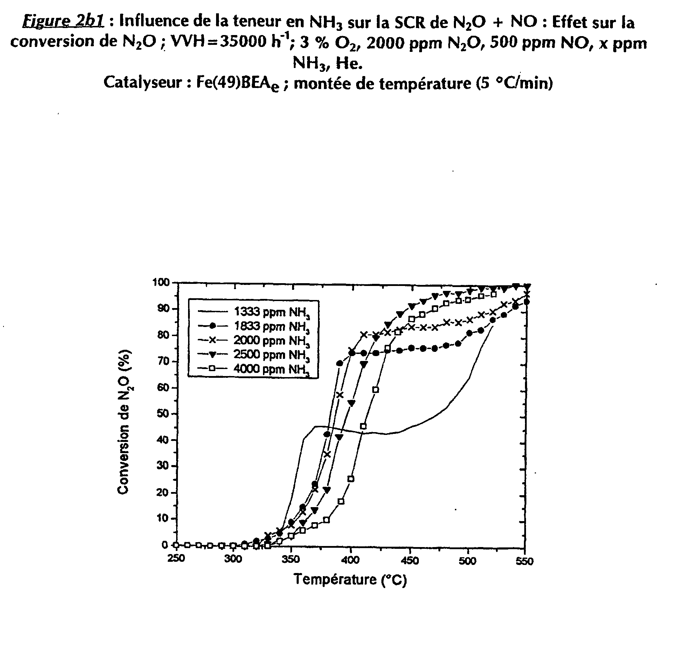

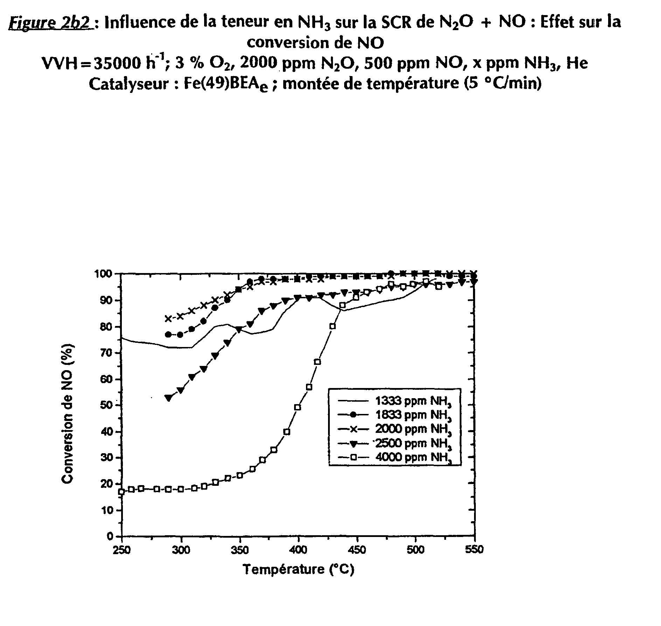

**Exemple 4 bis** : Influence de la teneur en ammoniac sur la réduction simultanée de $N_2O$ et NO (Fig. 2b)

L'effet de la concentration en ammoniac a été réalisé en présence de Fe(49)BEA$_e$ en réduction en température programmée d'un mélange $N_2O$, NO dans les conditions suivantes : 2000 ppmv $N_2O$, 500 ppmv NO, 1333 à 3500 ppmv $NH_3$, 3 % $O_2$ et une vitesse volumique horaire de 35000 h$^{-1}$.

On lit sur la figure 2b1 l'évolution de la teneur en $N_2O$ et sur la figure 2b2 celle de la teneur en NO. En ce qui concerne la conversion de $N_2O$, on note comme dans le cas de $N_2O$ seul, qu'un rapport NH3/oxydes d'azote ($N_2O$ + NO)=0,8 (2000 ppmv $NH_3$, 2000 ppmv $N_2O$, 500 ppmv NO) est nécessaire pour atteindre des conversions satisfaisantes (>80%). On peut aussi noter que dans des conditions de stoechiométrie inférieure ($NH_3$/oxydes d'azote < 0,8), l'ammoniac permet de consommer préférentiellement le NO, le $N_2O$ n'étant plus alors détruit que dans les proportions d'ammoniac restant. En ce qui concerne la conversion de NO, un trop fort excès de $NH_3$ ($NH_3$/NO=8, 4000 ppmv de NH3, 500 ppmv de NO) diminue fortement l'efficacité à réduire NO, mais tout l'excès de $NH_3$ introduit est transformé en $N_2$.

**Exemple 5** : influence de la teneur en fer de la bêta-fer

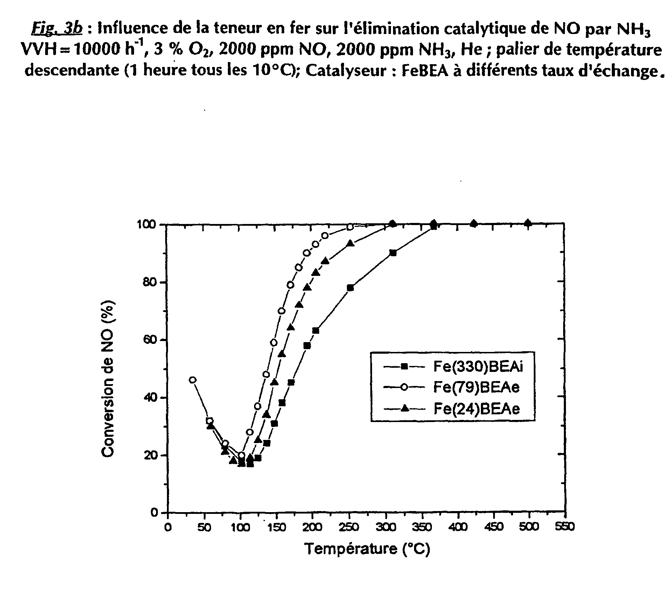

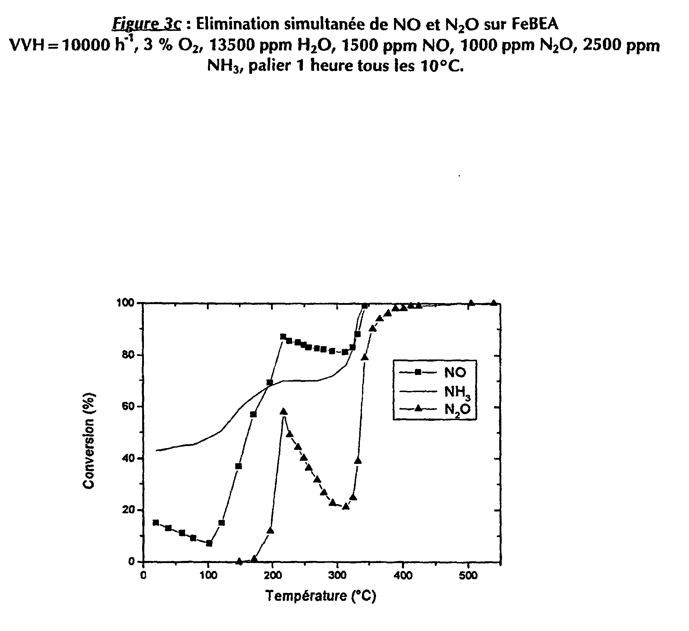

L'effet de la teneur en fer de la zéolithe bêta a été analysé par réduction en température programmée de $N_2O$ (Fig. 3a) de NO (Fig. 3b) et d'un mélange $N_2O$/NO (Fig. 3c) dans les conditions suivantes : 2000 ppmv $N_2O$, 2000 ppmv $NH_3$, 3 % $O_2$; 2000 ppmv $N_2O$, 2000 ppmv $NH_3$, 3 % $O_2$; 1500 ppmv $N_2O$, 1000 ppmv NO, 2000 ppmv $NH_3$, 3 % $O_2$, 2 % $H_2O$; et une vitesse volumique horaire de 35000 h$^{-1}$.

On observe qu'un taux d'échange compris entre 25 et 79 % permet d'obtenir la meilleure activité à plus basse température.

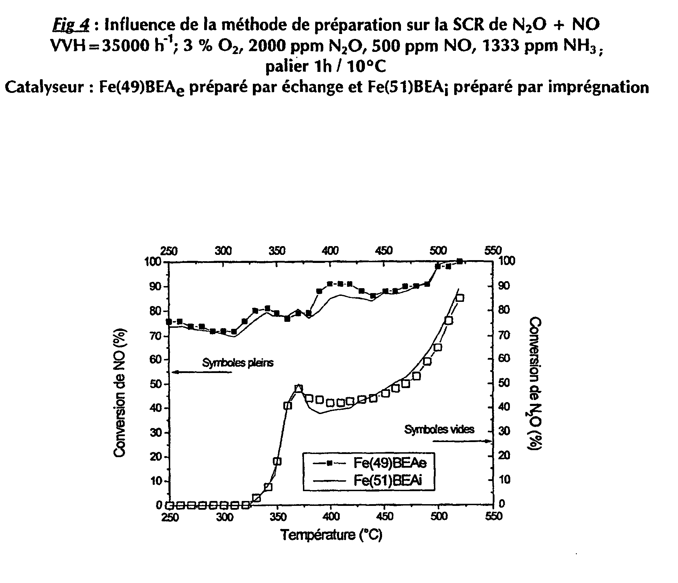

**Exemple 6** : influence de la méthode d'introduction du fer (Fig. 4)

La nature du mode d'introduction du fer dans la zéolithe Bêta a été examinée en réduction en température programmée de $N_2O$ dans les conditions suivantes : 2000 ppmv $N_2O$, 2000 ppmv $NH_3$, 3 % $O_2$ et une vitesse volumique horaire de 10000 h$^{-1}$.

Quelle que soit la technique d'introduction du fer, on obtient des FeBEA à efficacité comparable dans la transformation de $N_2O$ en $N_2$.

**Revendications**

1. Procédé pour abattre simultanément par réduction par l'ammoniac les oxydes nitriques $NO_x$ et le protoxyde d'azote $N_2O$ dans des gaz qui en contiennent de 100 à 7000 ppmv, en même temps que de l'oxygène et de l'eau qui consiste

   - à amener la teneur en ammoniac de ces gaz à des valeurs 0,7 < X < 1,4 où X = ammoniac / oxydes d'azote, rapports volumiques,
   - à faire circuler ces gaz à des températures comprises entre 200 et 600°C, sur un catalyseur comprenant une zéolithe bêta-fer.

**2.** Procédé selon la revendication 1 **caractérisé en ce que** la zéolithe béta-fer est sous forme d'un granulé zéolithe bêta-fer et un liant d'agglomération.

**3.** Procédé selon la revendication 1 dans lequel la zéolithe bêta-fer est une zéolithe bêta de rapport molaire Si/Al compris entre 8 et 100, de préférence entre 8 et 20, chargée en fer par imprégnation ou échange, dont la teneur en poids en fer est comprise entre 0,02 et 8 %, de préférence 0,5-3 %.

**4.** Procédé selon la revendication 1, dans lequel les gaz à épurer circulent sur le catalyseur bêta-fer à des vitesses volumiques horaires de 1000 à 50 000 h$^{-1}$.

**5.** Procédé selon la revendication 1 **caractérisé en ce que** la teneur en volume d'oxygène est comprise entre 1,5 et 5 % et la teneur en volume d'eau entre 0,5 et 5 %.

**6.** Procédé selon la revendication 1, dans lequel les gaz à épurer sont des gaz de queue d'ateliers de production d'acide nitrique.

**Patentansprüche**

**1.** Verfahren zur gleichzeitigen Entfernung von Stickoxiden NO$_x$ und Distickstoffmonoxid N$_2$O aus Gasen, die 100 bis 7000 Vol.-ppm davon enthalten, durch Reduktion mit Ammoniak zur gleichen Zeit wie Sauerstoff und Wasser, bei dem man:

- den Ammoniakgehalt dieser Gase auf Werte von 0,7 < X < 1,4, worin X für das Volumenverhältnis Ammoniak / Stickstoffoxide steht, einstellt,

- die Gase bei Temperaturen zwischen 200 und 600°C über einen Eisen enthaltenden Zeolith Beta als Katalysator leitet.

**2.** Verfahren nach Anspruch 1, **dadurch gekennzeichnet, daß** der Eisen enthaltende Zeolith Beta in Form eines Granulats aus Eisen enthaltendem Zeolith Beta und einem Agglomerationsbindemittel vorliegt.

**3.** Verfahren nach Anspruch 1, bei dem es sich bei dem Eisen enthaltenden Zeolith Beta um einen durch Imprägnieren oder Austausch mit Eisen beladenen Zeolith Beta mit einem Si/Al-Molverhältnis zwischen 8 und 100 und vorzugsweise zwischen 8 und 20 und einem Eisengehalt zwischen 0,02 und 8% und vorzugsweise 0,5-3% handelt.

**4.** Verfahren nach Anspruch 1, bei dem man die zu reinigenden Gase mit einer Belastung von 1000 bis 50.000 h$^{-1}$ über den Eisen-Beta-Katalysator leitet.

**5.** Verfahren nach Anspruch 1, **dadurch gekennzeichnet, daß** der Sauerstoffgehalt zwischen 1,5 und 5 Vol.-% und der Wassergehalt zwischen 0,5 und 5 Vol.-% beträgt.

**6.** Verfahren nach Anspruch 1, bei dem es sich bei den zu reinigenden Gasen um Abgase aus Anlagen zur Salpetersäureherstellung handelt.

**Claims**

**1.** Process for simultaneously scrubbing, by reduction with ammonia, the nitric oxides NO$_x$ and nitrous oxide N$_2$O in gases containing from 100 to 7000 ppmv thereof, at the same time as oxygen and water, which consists

- in bringing the ammonia content of these gases to values 0.7 < X < 1.4 where X = ammonia/nitrogen oxides, volumic ratios,
- in circulating these gases at temperatures of between 200 and 600°C, on a catalyst comprising an iron beta zeolite.

**2.** Process according to Claim 1, **characterized in that** the iron beta zeolite is in the form of an iron beta zeolite granule and an aggregation binder.

**3.** Process according to Claim 1, in which the iron beta zeolite is a beta zeolite with an Si/Al molar ratio of between 8 and 100, preferably between 8 and 20, loaded with iron by impregnation or exchange, the iron content by weight of which is between 0.02 and 8%, preferably 0.5-3%.

**4.** Process according to Claim 1, in which the gases to be purified circulate on the iron beta catalyst at gas hourly space volumes of 1000 to 50,000 h$^{-1}$.

**5.** Process according to Claim 1, **characterized in that** the content by volume of oxygen is between 1.5 and 5% and the content by volume of water between 0.5 and 5%.

**6.** Process according to Claim 1, in which the gases to be purified are tail gases from nitric acid production plants.

**_Fig. 1_** : Effet du support pour l'élimination catalytique de N$_2$O
VVH = 35000 h$^{-1}$ ; 3 % O2, 2000 ppm N$_2$O, 2000 ppm NH$_3$; montée de température
(5°C /min)

**_Fig. 2a_** : Influence de la présence de $NH_3$ sur l'élimination catalytique de $N_2O$ en présence de 3 % $O_2$ ; VVH = 35000 $h^{-1}$, 3 % $O_2$, 2000 ppm $N_2O$, He.

**_Figure 2b1_** : Influence de la teneur en NH$_3$ sur la SCR de N$_2$O + NO : Effet sur la conversion de N$_2$O ; VVH = 35000 h$^{-1}$; 3 % O$_2$, 2000 ppm N$_2$O, 500 ppm NO, x ppm NH$_3$, He.
Catalyseur : Fe(49)BEA$_e$ ; montée de température (5 °C/min)

**_Figure 2b2_** : Influence de la teneur en NH₃ sur la SCR de N₂O + NO : Effet sur la
conversion de NO
VVH = 35000 h⁻¹; 3 % O₂, 2000 ppm N₂O, 500 ppm NO, x ppm NH₃, He
Catalyseur : Fe(49)BEAₑ ; montée de température (5 °C/min)

**Fig. 3a** : SCR de $N_2O$ par $NH_3$ (2000 ppm / 2000 ppm) en présence de 3 % $O_2$ VVH = 35000 $h^{-1}$, catalyseur Fe,H-BEA à différents taux d'échange en fer.

**_Fig. 3b_** : Influence de la teneur en fer sur l'élimination catalytique de NO par $NH_3$ VVH = 10000 $h^{-1}$, 3 % $O_2$, 2000 ppm NO, 2000 ppm $NH_3$, He ; palier de température descendante (1 heure tous les 10°C); Catalyseur : FeBEA à différents taux d'échange.

*Figure 3c* : Elimination simultanée de NO et $N_2O$ sur FeBEA
$VVH = 10000\ h^{-1}$, 3 % $O_2$, 13500 ppm $H_2O$, 1500 ppm NO, 1000 ppm $N_2O$, 2500 ppm $NH_3$, palier 1 heure tous les 10°C.

Fig 4 : Influence de la méthode de préparation sur la SCR de $N_2O$ + NO
VVH = 35000 $h^{-1}$; 3 % $O_2$, 2000 ppm $N_2O$, 500 ppm NO, 1333 ppm $NH_3$;
palier 1h / 10°C
Catalyseur : Fe(49)BEA$_e$ préparé par échange et Fe(51)BEA$_i$ préparé par imprégnation